# EUROPEAN PATENT SPECIFICATION

(11) **EP 4 690 579 B1**
(45) Date of publication and mention of the grant of the patent: **21.10.2026**
(21) Application number: 23726608.5
(22) Date of filing: 28.04.2023
(51) Int. Cl.: H04L 1/1607, H04L 1/1812

(54) **IMPROVING PDSCH THROUGHPUT BY REDUCING NACK2ACK**
VERBESSERUNG DES PDSCH-DURCHSATZES DURCH REDUZIERUNG VON NACK2ACK
AMÉLIORATION DU DÉBIT DE PDSCH PAR RÉDUCTION DE NACK2ACK

(43) Date of publication of application: 11.02.2026
(73) Proprietor: Telefonaktiebolaget LM Ericsson (publ), 164 83 Stockholm (SE)
(72) Inventor: LIU, Qingchao, Ottawa, Ontario K2V 1B5 (CA); COLL, Pierre, Gatineau, Québec J8Z 3G2 (CA)
(74) Representative: E. Blum & Co. AG
(86) International application number: PCT/IB2023/054474
(87) International publication number: WO 2024/224154

(56) References cited:
- WO-A1-2015/154573
- US-A1- 2004 095 918
- US-A1- 2008 155 371
- LUCENT TECHNOLOGIES: "Energy requirements for UL ACK/NACK signaling under different sets of constraints", 3GPP DRAFT; R1-02-0420, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Orlando, USA; 20020218, 18 February 2002 (2002-02-18), XP050095959
- NTT DOCOMO ET AL: "PUCCH format2 DTX detection function", 3GPP DRAFT; R2-120333_PUCCH FORMAT2 DTX DETECTION FUNCTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 31 January 2012 (2012-01-31), XP050565371

## Description

### Technical Field

The present disclosure relates to methods for improving Physical Downlink Shared Channel throughput by reducing nack2ack in a wireless communication system.

### Background

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. Other objectives, features, and advantages of the enclosed embodiments will be apparent from the following description.

New Radio (NR) Downlink (DL) Carrier Aggregation (CA) allows a User Equipment (UE) to significantly increase its DL throughput by aggregating several carriers for its DL data transmission. To make effective use of the activated DL carriers, DL link adaptations on each carrier are needed to ensure the coding rate and beamforming are the best fit for the current radio channel conditions.

Hybrid Automatic Repeat Request (HARQ) is an essential component of Fifth Generation (5G) NR and key for NR DL carrier aggregations. The above DL link adaptations heavily rely on a UE's HARQ feedback reports for each DL carrier. The number of carrier components and Time Division Duplex (TDD) patterns can create a large HARQ feedback bundle within a UE report window. The HARQ feedback bits range can be in the range of 3 to 11bits.

A gNodeB (gNB) sends Downlink Control Information (DCI) on a Physical Downlink Control Channel (PDCCH) which carries scheduling information for uplink (UL) and downlink. It provides a UE with the necessary information for proper reception and decoding of the downlink data on a Physical Downlink Shared Channel (PDSCH) as well as transmitting the uplink data and UCI (Uplink Control Information) on a Physical Uplink Shared Channel (PUSCH) or UCI on a Physical Uplink Control Channel (PUCCH).

Link Adaptation (LA) is an important Radio Resource Management (RRM) function in wireless communication systems for reliable communication. The purpose of link adaptation is to determine the appropriate modulation and coding scheme (MCS) to maximize user throughput or data rate. In a typical system which utilizes HARQ, the task of LA is to determine the highest MCS for which the targeted operating point (e.g., block error rate (BLER) after certain number of HARQ transmissions) can be achieved. To perform link adaptation, information on the communication link quality is required. This may be obtained either from measurements at the transmitter or reports of Channel State Information (CSI) from receiver to transmitter. To achieve high throughput, LA may be performed in every transmission time interval (e.g., per slot).

As mentioned earlier, the DL link quality can be determined from reported CSI from UE. The methodology of evaluating link quality is not defined by Third Generation Partnership Project (3GPP) standards, and thus it varies from UE vendor to vendor. Some types of UEs may report optimistic CSI while other type of UEs may report pessimistic CSI. The CSI reported by UE is typically mapped to a channel quality measure by the transmitter (for example Signal to Interference and Noise Ratio (SINR)).

To accommodate systematic errors in Channel Quality Indicator (CQI) reporting from the UE and to track faster changes in channel conditions, a PDSCH outer-loop adjustment is normally used to generate an outer-loop adjustment OL_ADJ which is added to the PDSCH SINR estimation based on the CQI report. The overall estimated SINR based on CQI and outer-loop adjustment is used in determining the MCS. The outer-loop adjustment is calculated based on the PDSCH transmission result, which is determined by gNB. The transmission result could be a success, or failure.

For each DL transmission, the HARQ feedback result transmitted on either PUCCH or PUSCH could be:
- PDSCH acknowledgment (ACK), when the UE successfully decodes both PDCCH and PDSCH, and sends ACK to a gNB;
- PDSCH negative ACK (NACK), when the UE successfully decodes PDCCH but fails to decode PDSCH and sends NACK to gNB;
- Discontinuous Transmission (DTX), when the UE fails to decode PDCCH and does not send any feedback to gNB.

If data decoding errors cannot be caught by HARQ with Code Block (CB) and Transport Block (TB) Cyclic Redundancy Check (CRC) protections or a false ACK (nack2ack, dtx2Ack), upper layer retransmissions will be triggered by such as layer 2 (ARQ) Automatic Repeat Request or by applications.

There are five different formats of PUCCH, and which one of them is used is determined by how many bits of information should be carried and how many symbols are assigned.

There currently exist certain challenge(s). With DL Carrier Aggregation (CA) and TDD carrier components, the bundled DL HARQ feedback bits will be in the range of 3 to 35 bits, depending on the number of carrier components and each carrier component's TDD pattern. Furthermore, the HARQ feedback from UE through gNB UL channels (PUCCH and PUSCH) will be vital to dictating the PDSCH transmissions and their re-transmissions. Hence, the HARQ feedback decoding performance dramatically impacts the PDSCH throughput and packet latency at application level.

If there is no UL traffic, PUCCH format 3 is often used to carry the HARQ feedback. PUCCH format 3 decoding performance is thus key to the success of the PDSCH transmissions. If the decoding performance can be improved by 1 or 2dBs, the cell coverage can be extended, and the feedback will be more reliable.

When the PDSCH HARQ feedback bits are within 3 to 11 bits, small block encoder (size N = 32) is used at transmitter and given by 3GPP TS 38.212 chapter 5.3.3.3. When this encoder is used, it does not have CRC to protect the validity of the decoding, and at receiver side we must find other way to improve the decoding efficiency and quality.

At the gNB receiver side for small block transmissions, there are in total 2^A different codewords b_i (n), n=0,1,...,N-1, where N=32 (block size), in the code book given by: ${b}_{i} \left(n\right) = {\sum }_{m = 0}^{A - 1} \left({a}_{m}⋅{M}_{n , m}\right) mod 2$ Eqn. 1
where *aₘ* ∈ {0,1}is the binary representation of one bit and *M_{n,m}* are basis sequences specified in Table 5.3.3.3-1 of 3GPP TS 38.212.

Each codeword *bᵢ*(*n*), *n* = 0,1, ... , *N* - 1, in the code book is first mapped to bipolar form *qᵢ*(*n*) by *qᵢ*(*n*) = 1 - 2*bᵢ*(*n*), *n* = 0,1, ... , *N -* 1.

The decision variable for codeword *i, dᵢ*, is given as a scalar product of the rate dematched soft values *ŝ* and the codeword *qᵢ*: ${d}_{i} = {\sum }_{n = 0}^{N - 1} s \left(n\right) ⋅ {q}_{i} \left(n\right) , i = 0 , 1 , … {, 2}^{A} - 1$ Eqn. 2
where *s*(*n*) are the soft value.

The detected codeword is ${i}_{max} = {arg max}_{i} \left\{{d}_{i}\right\}$*,* the corresponding *dᵢ* is the best decoding metric, and denote it *dₘₐₓ*, and the second best codeword is found ${i}_{sec} = {arg max}_{i \ \left\{{i}_{max}\right\}} \left\{{d}_{i}\right\}$ by excluding the best codeword. Denote the second-best decoding metric as *d_{sec}.*

The tentatively decoded bits *â*(*m*) are given as the binary representation of the detected codewords: *â*(*m*), *m =* 0,1*, ...A* - 1 is the binary representation of *i*ₘₐₓ.

For fast decoding, the above decoding process is normally replaced by fast Hadamard transformation decoder.

When the HARQ feedback bits are decoded as outlined above, we shall meet the 3GPP requirements, ack missed to be 1%, BLER to be 1%, DTX to ack to be 1% and Nack2Ack to be 0.1%.

The best decoding performance can be achieved if all target SNR's (Signal to Noise Ratio) can be met at the same SNR value, and we do not have the imbalance issue. The current commonly used small block decoder has this imbalance issue.

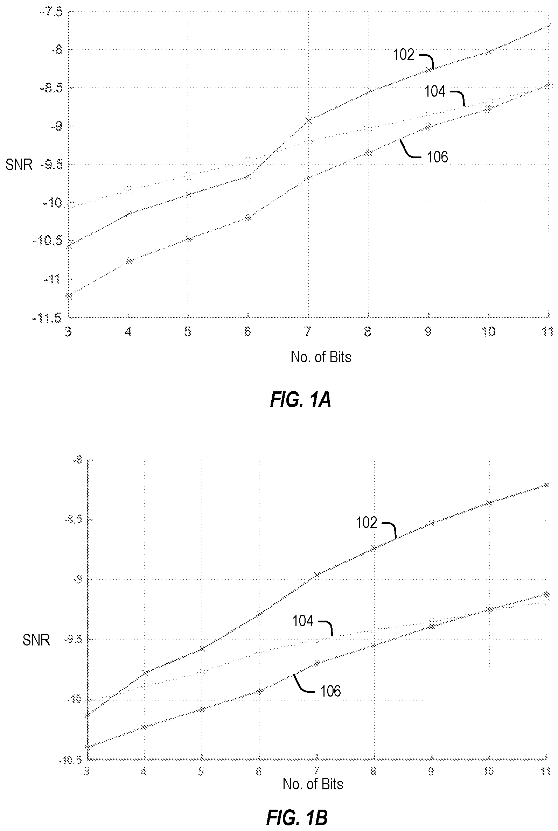

Figure 1A depicts nack2ack decoding issues with a normal speed UE, while Figure 1B depicts nack2ack decoding issues with a highspeed UE.

The horizontal axes in Figures 1A and 1B are the number of HARQ feedback bits, while the vertical axis is the target SNR's to meet 1% BLER 106, 1% ackmiss 104 and 0.1% nack2ack 102.

Figure 1A shows from 7 to 11 HARQ feedback bits with normal UE speed, nack2ack 102 is on a critical path and will cause a decoding issue (0.1% nack2ack) at a higher SNR than the 1% ackmiss rate 104. The nack2ack target SNR is generally below other targets (ackmiss 104 and BLER 106) SNR's. In Figure 1B, the nack2ack (102) 0.1% error rate is at a higher SNR than the ackmiss (104) 1% error rate at all number of bits except for 3 for a high speed train UE.

Nack2Ack decoding errors have a higher impact than ackmiss 104 and BLER 106 because it will cause PDSCH Transport Block (TB) transmission to be terminated even if the TB transmission is still needed to be retransmitted. This behavior will cause upper layers (Radiolink Control (RLC) ARQ or applications) retransmission and long packet delays and will drag down PDSCH throughput significantly and waste airlink resources.

US 20080155371 A1 discloses that a detection method for ACK/NACK includes the steps of: (a) calculating a threshold between ACK and DTX, which includes two values, the first being proportional to a noise standard deviation after despreading the received signal, and the second depending on an estimated received signal for ACK, (b) calculating a threshold between NACK and DTX, which includes two values, the first being proportional to a noise standard deviation after despreading the received signal, and the second depending on an estimated received signal for NACK, (c) selecting the threshold with maximum absolute value from the two calculated values of the threshold between ACK and DTX, (d) selecting the one with maximum absolute value from the two calculated values of the threshold between NACK and DTX, and (e) comparing a decision variable with the two selected thresholds. An ACK/NACK detector includes a threshold generating unit used for selecting the threshold with maximum absolute value from the two calculated values of the threshold between ACK and DTX, and the threshold between NACK and DTX, respectively.

US 20040095918 A1 discloses a method and apparatus for detecting discontinued transmission (DTX) frames in data frames received over a link or channel, where a DTX frame is a frame that does not carry data and which is transmitted with zero power over the link or channel. The method and apparatus determines whether a received data frame is a DTX frame based on a plurality of metrics. Based on the metrics, the method and apparatus may effectively discriminate a case where a data frame is received as an erasure, and a case where a transmitted data frame is received as a DTX frame.

WO 2015154573A1 discloses a DTX detection method. The method comprises: receiving the feedback signal sent by the uplink terminal; extracting information bits set in the feedback signal for DTX detection; performing polarity processing on the extracted information bits; obtaining the DTX detection value according to the information bits of different polarities; comparing the DTX detection value with a preset DTX detection threshold, and determining whether the uplink terminal is in the DTX state according to the comparison result.

"Energy requirements for UL ACK/NACK signaling under different sets of constraints" discloses energy requirements for uplink ACK/NACK signaling (for HSDPA HARQ protocol) based on the agreed upon UL physical channel structure. Optimal individual energies for ACK and NACK symbols as well as optimal receiver thresholds are considered for a variety of vehicle speeds, under Jakes fading with power control and two antenna receive diversity. The analysis and results are presented in three sections where in each section, the design problem is precisely formulated and progressively the number of false alarm constraints are increased, leading to different signal and receiver designs.

"PUCCH format2 DTX detection function" is a 3GPP RAN2 contribution from NTT DOCOMO discussing the DTX detection function for LTE PUCCH format 2, reviewing the function that discards unreliable PUCCH format 2 signals based on a received power threshold to improve detection accuracy, CQI reliability, and UE disconnection detection, analyzing whether 1% and 10% false alarm rates are suitable target values and concluding that 1% false alarm is preferred and 10% is also acceptable under strict BLER constraints.

### Summary

Various embodiments described herein provide for improvements to the small block decoder used for format 3 Physical Uplink Control Channel (PUCCH) decoding for 3 to 11 bits to improve the Physical Downlink Shared Channel (PDSCH) throughput. Two decoding metrics are used to control the downlink (DL) Hybrid Automatic Repeat Request (HARQ) bits decoding performance related to Block Error Rate (BLER), ackmiss, nack2ack, and dtx2ack, to align the 1% ackmiss target signal to noise ratio (SNR) with 0.1% nack2ack SNR value. By presimulating the decoding metric thresholds, the nack2ack SNR value to meet the 0.1% requirement will be significantly reduced.

The invention is defined in independent claims 1, 12 and 13.

### Brief Description of the Drawings

The accompanying drawing figures incorporated in and forming a part of this specification illustrate several aspects of the disclosure, and together with the description serve to explain the principles of the disclosure.
Figures 1A and 1B illustrate graphs showing signal to noise ratio (SNR) values required to achieve the target nack2ack, ackmiss, and block error rate (BLER) targets for different numbers of bits for regular (1A) and highspeed (1B) User Equipments (UEs).
Figure 2 illustrates one example of a cellular communications system in which embodiments of the present disclosure may be implemented.
Figure 3 illustrates an exemplary receive chain of a base station device according to one or more embodiments of the present disclosure.
Figure 4 illustrates a flowchart of a method for improving Physical Downlink Shared Channel (PDSCH) throughput according to one or more embodiments of the present disclosure.
Figures 5A-5C illustrate exemplary tables of presimulated decoding metric thresholds according to some embodiments of the present disclosure.
Figures 6A and 6B illustrate exemplary tables of presimulated decoding metric thresholds according to some embodiments of the present disclosure.
Figure 7 illustrates an exemplary table of presimulated decoding metric thresholds according to some embodiments of the present disclosure.
Figure 8 illustrates a graph showing nack2ack performance improvement relative to ackmiss and BLER improvements according to some embodiments of the present disclosure.
Figures 9A-9F illustrate graphs showing improvements to SNR values required to achieve the target nack2ack rates for different numbers of bits in different conditions according to some embodiments of the present disclosure.
Figure 10 is a schematic block diagram of a radio access node according to some embodiments of the present disclosure.
Figure 11 is a schematic block diagram that illustrates a virtualized embodiment of the radio access node according to some embodiments of the present disclosure.
Figure 12 is a schematic block diagram of the radio access node according to some other embodiments of the present disclosure.

### Detailed Description

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

**Base Station Device:** As used herein, a "base station device" is any node in a Radio Access Network (RAN) of a cellular communications network that operates to wirelessly transmit and/or receive signals. Some examples of a radio access node include, but are not limited to, a New Radio (NR) base station (gNB) in a Third Generation Partnership Project (3GPP) Fifth Generation (5G) NR network or an enhanced or evolved Node B (eNB) in a 3GPP Long Term Evolution (LTE) network, a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

Various embodiments described herein provide for improvements to the small block decoder used for format 3 Physical Uplink Control Channel (PUCCH) decoding for 3 to 11 bits to improve the Physical Downlink Shared Channel (PDSCH) throughput. Two decoding metrics are used to control the downlink (DL) Hybrid Automatic Repeat Request (HARQ) bits decoding performance related to Block Error Rate (BLER), ackmiss, nack2ack, and dtx2ack, to align the 1% ackmiss target signal to noise ratio (SNR) with 0.1% nack2ack SNR value. By presimulating the decoding metric thresholds, the nack2ack SNR value to meet the 0.1% requirement will be significantly reduced.

Two decoding metrics *dₘₐₓ* and *d_{delta} =* (*dₘₐₓ* - *d*_{sec )} are used to control the DL HARQ bits decoding performance related to BLER, ackmiss, nack2ack, and dtx2ack.

As described above, for the detected codeword, ${i}_{max} = {arg max}_{i} \left\{{d}_{i}\right\}$, *dₘₐₓ* is the corresponding *dᵢ* that is the best decoding metric. A second codeword from the codebook that returns the second best decoding metric is *d_{sec}.* The *d_{delta}* is thus the difference between decoding metrics associated with the best codeword and the second best codeword.

*d_{delta}* is used to align 1% ackmiss target SNR value with 0.1% nack2ack Signal to Noise ratio (SNR) value and try to make sure nack2ack is not gating (or on a critical path) compared against ackmiss target SNR value. This decoding metric behaves as a weak cyclic redundancy check (CRC) and improves required nack2ack target SNR significantly and the decoding reliability.

Through simulations, thresholds are found for *dₘₐₓ* and *d_{delta},* they will be used in the decoding process.

Then *dₘₐₓ* and *d_{delta}* are used together with simulated thresholds to meet 1% dtx2ack, 1% ackmiss, 0.1% nack2ack and 1% BLER requirements. The nack2ack required SNR value to meet the 0.1% requirement can therefore be significantly reduced.

An improvement is found such that the needed target SNR to meet 0.1% nack2Ack is reduced while the 1% target ackmiss SNR will not be affected much, thus achieving decoding balance. To achieve that performance goal, *dₘₐₓ* and *d_{delta} =* (*dₘₐₓ* - *d*_{sec)} are used to control the alignment of target SNR's for BLER, nack2ack, ackmiss and discontinuous transmission (DTX) to ACK. Here *d_{delta}* plays a similar role as a weak CRC and controls the nack2ack rate. Simulations are done to find threshold tables to achieve the best decoding performance.

Certain embodiments may provide one or more of the following technical advantage(s). The decoding metrics can behave as a weak cyclic redundancy check (CRC) which can improve the small block HARQ feedback decoding quality. Another improvement is that nack2ack decoding performance can be improved between a half dB to 2dB and nack2ack can be removed from gating, which can reduce false HARQ success (nack2ack) significantly and thus reduce higher (or upper) layer retransmissions. Furthermore, by improving the small block decoding performance with different decoding metrics *d_{delta}* and *dₘₐₓ,* nack2ack and overall decoding reliability and performance will be achieved for small block decoder especially for bits from 7 to 11 for normal speed UE and for bits from 3 to 11 with highspeed train UE, and thus boosting PDSCH throughput significantly and reduce upper layer retransmissions and end-to-end packet latency. Another advantage is that cell coverage can be improved due to the improved decoding performance.

In the present disclosure, the focus is on PUCCH Format3 small block decoding performance improvement of 3 to 11bits HARQ feedbacks without CRC protection from standard and how to use the results for PDSCH and Physical Downlink Control Channel (PDCCH) link adaptations. PDSCH uses ACK/NACK to do outer-loop adjustment while PDCCH uses DTX/non-DTX to do outer-loop adjustment. Furthermore, the methods and techniques disclosed herein can also be implemented for other PUCCH formats such as Format 4, and small block uplink control information (UCI) decoding on Physical Uplink Shared Channel. Additionally, the methods and techniques disclosed herein can also be used with cloud RAN and Open RAN.

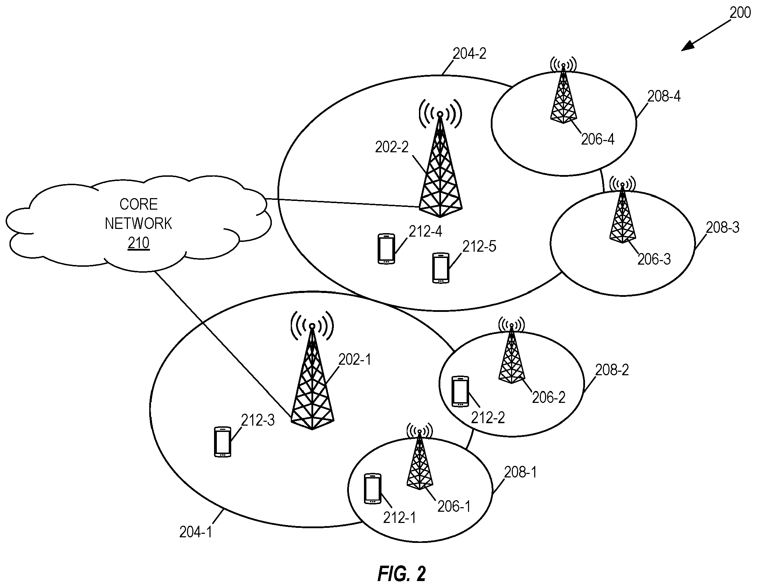

Figure 2 illustrates one example of a cellular communications system 200 in which embodiments of the present disclosure may be implemented. In the embodiments described herein, the cellular communications system 200 is a 5G system (5GS) including a Next Generation RAN (NG-RAN) and a 5G Core (5GC) or an Evolved Packet System (EPS) including an Evolved Universal Terrestrial RAN (E-UTRAN) and an Evolved Packet Core (EPC). In this example, the RAN includes base stations 202-1 and 202-2, which in the 5GS include NR base stations (gNBs) and optionally next generation eNBs (ng-eNBs) (e.g., LTE RAN nodes connected to the 5GC) and in the EPS include eNBs, controlling corresponding (macro) cells 204-1 and 204-2. The base stations 202-1 and 202-2 are generally referred to herein collectively as base stations 202 and individually as base station 202. Likewise, the (macro) cells 204-1 and 204-2 are generally referred to herein collectively as (macro) cells 204 and individually as (macro) cell 204. The RAN may also include a number of low power nodes 206-1 through 206-4 controlling corresponding small cells 208-1 through 208-4. The low power nodes 206-1 through 206-4 can be small base stations (such as pico or femto base stations) or RRHs, or the like. Notably, while not illustrated, one or more of the small cells 208-1 through 208-4 may alternatively be provided by the base stations 202. The low power nodes 206-1 through 206-4 are generally referred to herein collectively as low power nodes 206 and individually as low power node 206. Likewise, the small cells 208-1 through 208-4 are generally referred to herein collectively as small cells 208 and individually as small cell 208. The cellular communications system 200 also includes a core network 210, which in the 5G System (5GS) is referred to as the 5GC. The base stations 202 (and optionally the low power nodes 206) are connected to the core network 210.

The base stations 202 and the low power nodes 206 provide service to wireless communication devices 212-1 through 212-5 in the corresponding cells 204 and 208. The wireless communication devices 212-1 through 212-5 are generally referred to herein collectively as wireless communication devices 212 and individually as wireless communication device 212. In the following description, the wireless communication devices 212 are oftentimes UEs, but the present disclosure is not limited thereto.

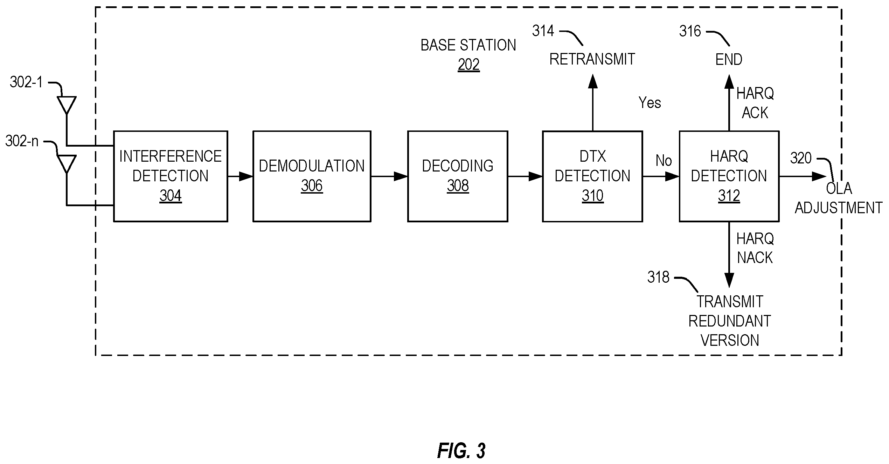

Figure 3 illustrates an exemplary receive chain of a base station device 202 according to one or more embodiments of the present disclosure.

The base station device 202 can receive a PUCCH transmission from wireless communication device 212, at one or more of antennas 202-1 to 202-n. Interference detection 304 can be performed on the PUCCH transmission in order to determine whether to use Maximum Ratio Combining (MRC) or Interference Rejection Combining (IRC) demodulation.

After the received PUCCH transmission is demodulated at 306, the base station 202 can decode the PUCCH transmission at 308. In an embodiment, the PUCCH transmission can be decoded with a first value of a function of the PUCCH transmission corresponding to a codeword of a codebook, wherein the first value is a maximum value of the function. Then the received PUCCH transmission can also be decoded with a second value of the function of the PUCCH transmission corresponding to another codeword of the codebook, wherein the second value is a next highest value of the function after the first value, and wherein a first decoding metric is the first value of the function, and a second decoding metric is a difference between the first value of the function and the second value of the function.

DTX detection is then performed at 310 where it determines whether the PUCCH transmission is DTX true in response to either the first decoding metric being below a first decoding metric threshold, or the second decoding metric being below a second decoding metric threshold. The base station 202 can also determine whether the PUCCH transmission is DTX false in response to both the first decoding metric being equal to or above the first decoding metric threshold, and the second decoding metric being equal to or above the second decoding metric threshold.

The first decoding metric threshold is *dₘₐₓ* threshold entitled *d_{max_chr}.* The second decoding metric threshold is a *d_{delta}* threshold entitled *d_{delta_thr}.*

The first step is to find *d_{delta}* thresholds through simulations to make sure the 1% ackmiss target SNR and 0.1% nack2ack target SNR are aligned and meeting the following two conditions:
Condition 1: ${SNR}_{1 %ackmiss} \geq {SNR}_{0.1 %nack 2 ack}$ Eqn. 3

And sweeping *d_{delta_thr}* to meet condition 1 requires the following decoding failures which are Condition 2: $if \left({d}_{delta}<{d}_{delta _ thr}\right) DTX = TRUE . Otherwise , DTX = FALSE .$ Eqn. 4

The above condition 2 is like triggering a decoding failure as with CRC check.

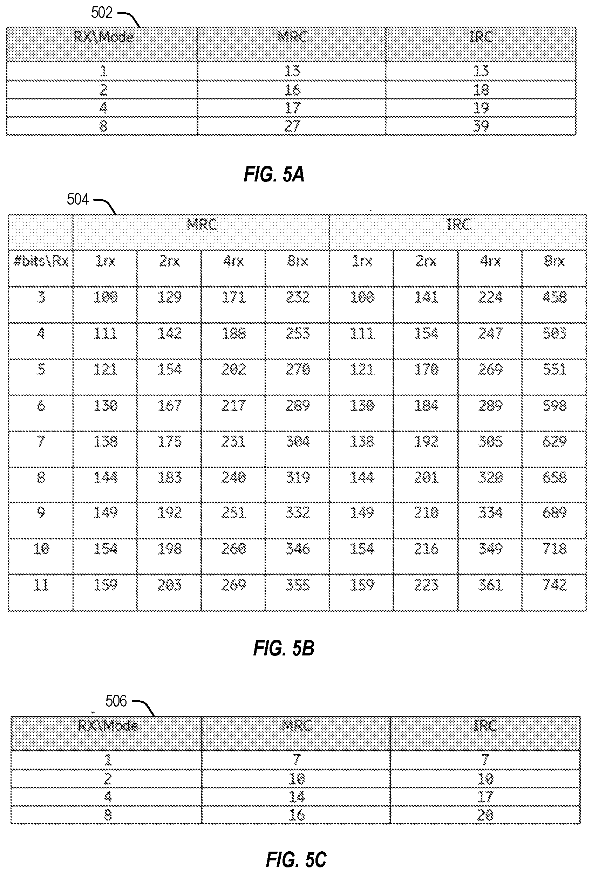

Based on simulations, example threshold table is found for *d_{delta},* example thresholds for *d_{delta}* are shown in Fig. 5A with table 502 for a normal speed UE with frequency hopping (FH) configured.

The second step is to find *dₘₐₓ* thresholds through simulations. With applying the *d_{delta}* thresholds only and sweeping *d*_{max *_thr*} thresholds to meet 1% dtx2ack target: $if \left(\left({d}_{max}<{d}_{max _ thr}\right)\left‖\left({d}_{delta}<{d}_{delta _ thr}\right)\right.\right) DTX = TRUE . Otherwise , DTX = FALSE .$

The thresholds for *dₘₐₓ* are derived through simulations and examples are in table 504 in Fig. 5B for a normal speed UE with frequency hopping configured.

Once the two thresholds are found, the above DTX detection equation will be used for DTX detection at 310.

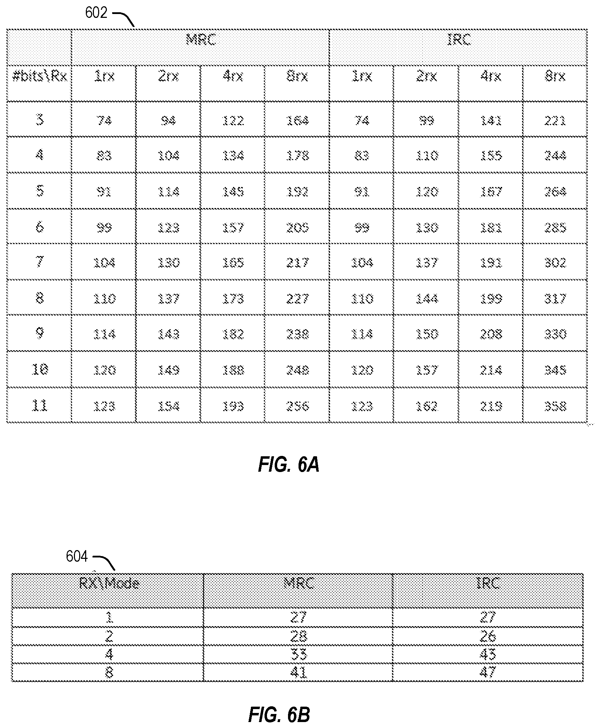

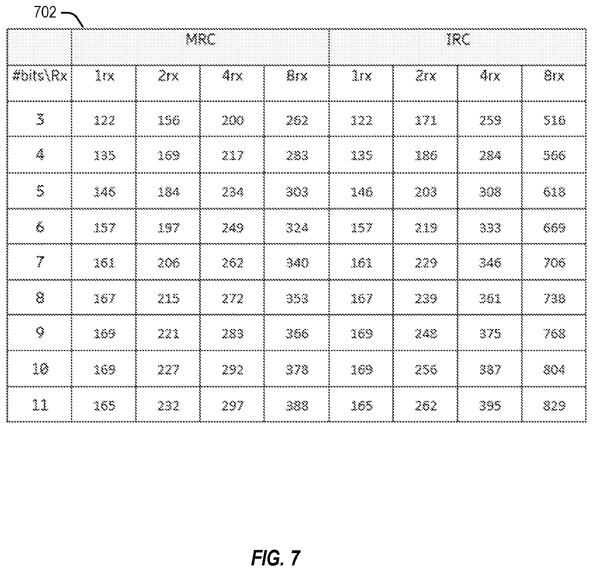

Table 506 in Fig. 5C is the *d_{delta_thr}* for Normal Speed UEs without FH while Table 602 in Figure 6A is the *d*_{max*_thr*} for Highspeed UE with FH, table 604 in Figure 6B is the *d_{delta_thr}* for Highspeed Train UE with FH, and table 702 in Figure 7 is the *d*_{max *_thr*} for Highspeed UE with FH.

If either of the decoding metrics is below their respective thresholds, we consider it DTX true, which means that the UE 212 failed to decode the PDCCH transmission and didn't send the

HARQ feedbacks to the base station 202. As a result, the base station 202 shall retransmit the same data packets at step 314 to the UE 212 with the same redundant version. If the decoding result is classified as successful (DTX false), it means that the UE 212 successfully decoded the PDCCH and sent its corresponding HARQ feedback, and HARQ detection is performed at 312. Based on the decoding result, base station 202 will perform the following process. If the HARQ feedback is NACK, its corresponding data packet will be retransmitted with a different redundant version at step 318. If it is ACK, the base station 202 knows that the UE 212 successfully received the data packet and will remove it from the DL transmit buffer and terminate the HARQ process at step 316. The decoding result can also be used to make the outer-loop adjustment of PDSCH SINR and PDCCH SINR at step 320.

**For PDSCH outer-loop adjustment,** if the previous transmission's HARQ feedback is not DTX and the decoded bit is ACK, the PDSCH SINR are increased by an amount defined as UP_STEP. So, the SINR adjustment will be:
$OL_ADJ + = UP_STEP$

If the decoded bit is NACK, the PDSCH SINR is decreased by an amount defined as DOWN_STEP. So, the SINR adjustment will be:
$OL_ADJ - = DOWN_STEP$

If the previous transmission HARQ feedback is classified as either a DTX or "unknown", no action is required for PDSCH outer loop adjustment.

The ratio of the UP_STEP and DOWN_STEP is determined based on the desired BLER target in percentage (or the PDSCH transmission failure rate)
$DOWN_STEP / UP_STEP = 100 / BLER_TARGET - 1$

The DOWN_STEP value can be tuned to have the desired outer-loop convergence speed. BLER_TARGET can be pre-determined, e.g., 10%.

For PDCCH outer-loop adjustment, if DTX is not detected, it means that the UE has successfully decoded the PDCCH. The PDCCH SINR is increased by an amount defined as UP_STEP. So, the SINR adjustment will be:
$OL_ADJ + = UP_STEP$

If DTX is detected, the PDCCH SINR is decreased by an amount defined as DOWN_STEP. So, the SINR adjustment will be:
$OL_ADJ - = DOWN_STEP$

The ratio of the UP_STEP and DOWN_STEP can be tuned based on some different operating target criteria and depending on applications.

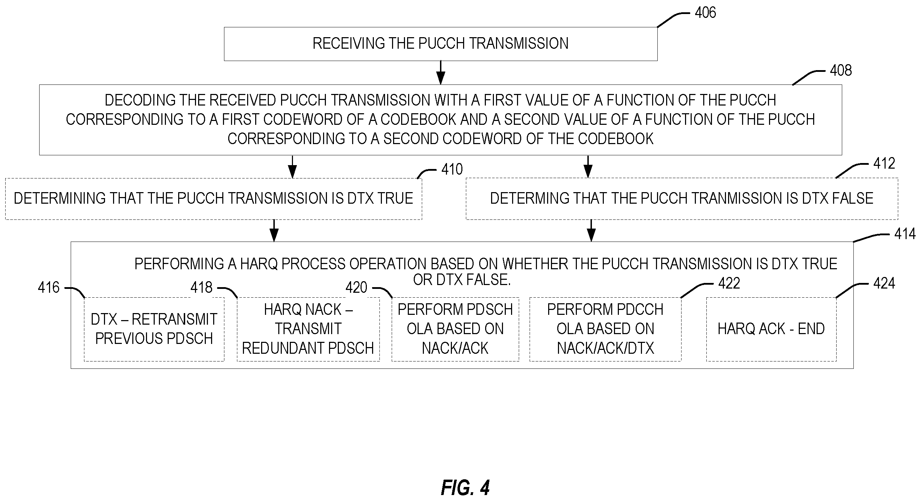

Figure 4 illustrates a flowchart of a method for improving Physical Downlink Shared Channel (PDSCH) throughput according to one or more embodiments of the present disclosure.

Figure 4 can start at step 406, where the method includes receiving a PUCCH transmission from a wireless communication device over a wireless channel from the wireless communication device to the base station.

At step 408, the method can include decoding the received PUCCH transmission with a first value of a function of the PUCCH transmission corresponding to a codeword of a codebook, wherein the first value is a maximum value of the function. Step 408 can also include decoding the received PUCCH transmission with a second value of the function of the PUCCH transmission corresponding to another codeword of the codebook, wherein the second value is a next highest value of the function after the first value, and wherein a first decoding metric is the first value of the function, and a second decoding metric is a difference between the first value of the function and the second value of the function.

In an embodiment, the first value of the function is a scalar product of rate de-matched soft values of the PUCCH transmission and the codeword. In an embodiment, the second value of the function is a scalar product of rate de-matched soft values of the PUCCH transmission and the other codeword.

In an embodiment, determining the first value of the function and the second value of the function comprises determining the scalar products of rate de-matched soft values of the PUCCH transmission and each codeword in the codebook.

In an embodiment, the PUCCH transmission comprises HARQ bits associated with a PDSCH transmission.

The method can continue at step 410, where the method optionally includes determining that the PUCCH transmission is DTX true in response to either the first decoding metric being below a first decoding metric threshold, or the second decoding metric being below a second decoding metric threshold.

At step 412, the method optionally includes determining that the PUCCH transmission is DTX false in response to both the first decoding metric being equal to or above the first decoding metric threshold, and the second decoding metric being equal to or above the second decoding metric threshold.

In an embodiment, the first decoding metric threshold and the second decoding metric threshold are pre-simulated.

In an embodiment, the second decoding metric threshold is selected first such that a first signal to noise ratio, SNR, associated with a 1% acknowledgement miss rate is equal to or higher than a second SNR associated with a 0.1% false acknowledgment rate, then the first decoding metric threshold is selected or simulated such that false detection rate (e.g., a DTX to Acknowledgement rate) is less than 1% in conjunction with the second metric threshold.

In an embodiment, the first decoding metric threshold is selected based on: a number of bits, a speed of a UE, whether frequency hopping is enabled, and whether the PUCCH transmission is demodulated using MRC or IRC demodulation.

At step 414, the method can include performing (414) a HARQ process operation based on whether the PUCCH transmission is DTX true or DTX false.

The performing the HARQ process operation can include providing (416) to a base station scheduler a request to retransmit the PDSCH transmission if the PUCCH transmission is DTX true.

In response to the received PUCCH being DTX false, performing (418, 424) HARQ detection on the PDSCH transmission. If the HARQ detection is negative, at step 418, the method can include providing to a base station scheduler a request to transmit a redundant PDSCH. If the HARQ detection is positive, at step 424, the method can include ending the HARQ process.

At step 420, the method includes performing a PDSCH outer-loop adjustment based on the at least one of the HARQ ACK or NACK. At step 422, the method includes performing (422) a PDCCH outer-loop adjustment based on at least one of the HARQ ACK, HARQ NACK, or whether DTX is true or false.

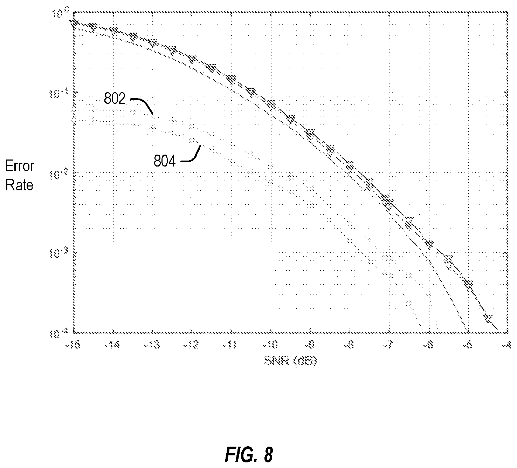

Figure 8 illustrates a graph showing nack2ack performance improvement relative to ackmiss and BLER improvements according to some embodiments of the present disclosure.

In Figure 8, the y-axis denotes the percent of nack2ack, ackmiss, and BLER over the x-axis of SNR. The line 802 is a baseline nack2ack and line 804 is the improved nack2ack after the improvements due to the techniques disclosed herein. There is a clear lowering of the SNR for the line 804 at every SNR point.

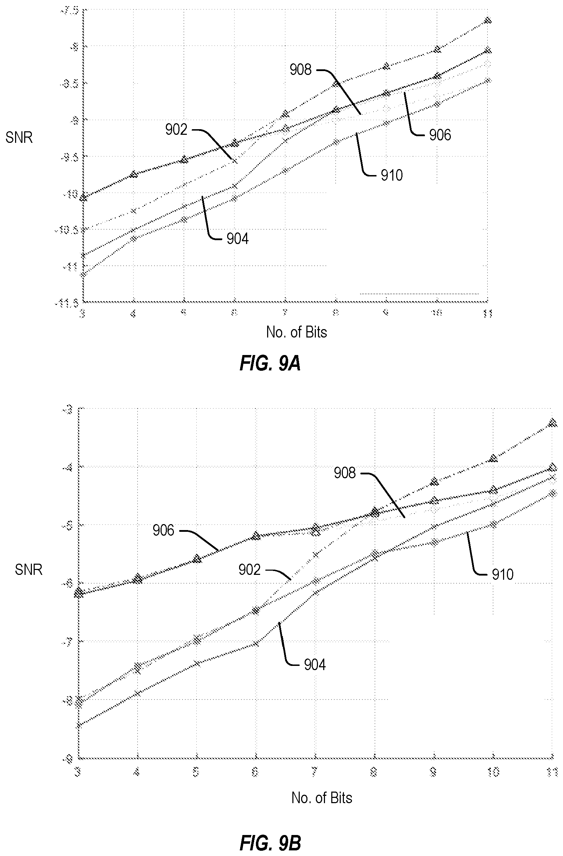

Figures 9A-9F illustrate graphs showing improvements to SNR values required to achieve the target nack2ack rates for different numbers of bits in different conditions according to some embodiments for the present disclosure. In each of Figures 9A-9F, the y-axis is target SNR, and the x-axis is number of HARQ bits, and the lines represent the SNR required to achieve the target BLER, ackmiss, and nack2ack miss rates of 1%, 1%, and 0.1% respectively. For example, in each of Figures 9A-9F, 902 is the baseline nack2ack, 904 is the improved nack2ack, 908 is the baseline ackmiss, 906 is the improved ackmiss, and 910 is the BLER. As can be seen in the figures, after the improvements, the improved nack2ack 904 is closer to, or does not exceed the SNR required to achieve the target ackmiss.

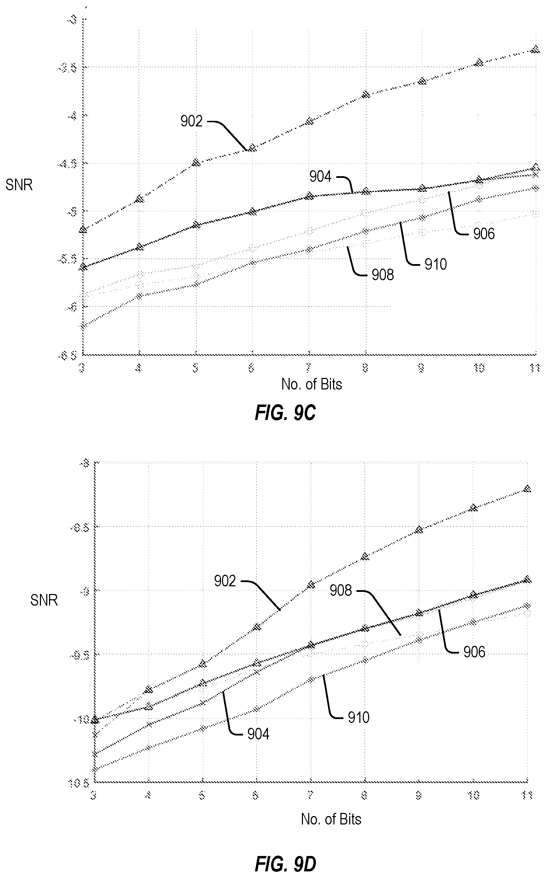

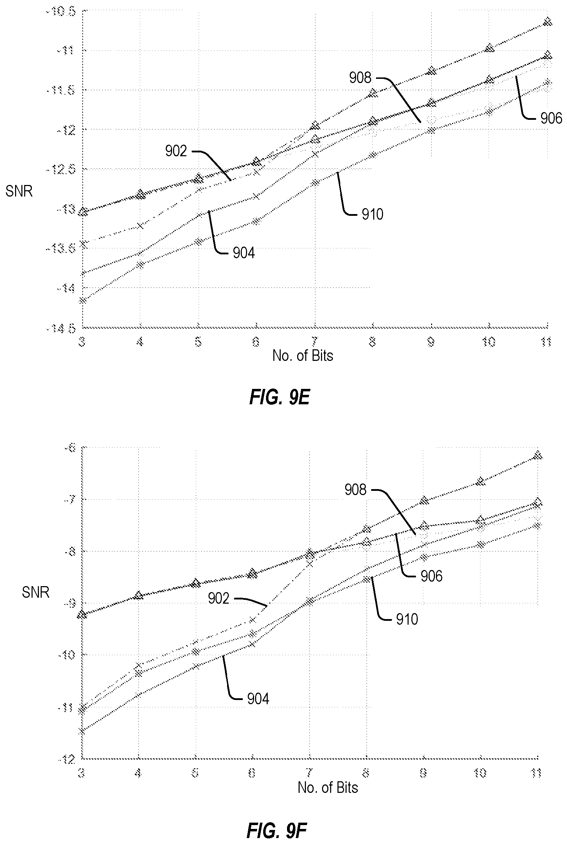

Figure 9A represents the Additive White Gaussian Noise (AWGN) channel decoding nack2ack error improvement. Figure 9B is the TDLC Channel nack2ack error improvement. Figure 9C is the 1 Rx Nack2ack improvement for a highspeed train UE. Figure 9D is the 4Rx Nack2ack improvement for a highspeed train UE. Figure 9E shows the improvements in nack2ack for a midband 4Rx non-frequency hopping AWGN channel. Figure 9F shows the improvements in nack2ack for a midband 4Rx non-frequency hopping TLDC channel.

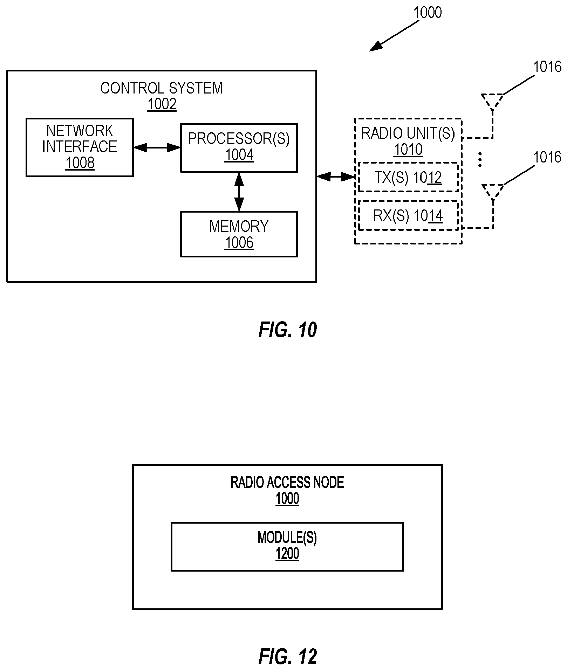

Figure 10 is a schematic block diagram of a radio access node 1000 according to some embodiments of the present disclosure. Optional features are represented by dashed boxes. The radio access node 1000 may be, for example, a base station 202 or 206 or a network node that implements all or part of the functionality of the base station 202 or gNB described herein. As illustrated, the radio access node 1000 includes a control system 1002 that includes one or more processors 1004 (e.g., Central Processing Units (CPUs), Application Specific Integrated Circuits (ASICs), Field Programmable Gate Arrays (FPGAs), and/or the like), memory 1006, and a network interface 1008. The one or more processors 1004 are also referred to herein as processing circuitry. In addition, the radio access node 1000 may include one or more radio units 1010 that each includes one or more transmitters 1012 and one or more receivers 1014 coupled to one or more antennas 1016. The radio units 1010 may be referred to or be part of radio interface circuitry. In some embodiments, the radio unit(s) 1010 is external to the control system 1002 and connected to the control system 1002 via, e.g., a wired connection (e.g., an optical cable). However, in some other embodiments, the radio unit(s) 1010 and potentially the antenna(s) 1016 are integrated together with the control system 1002. The one or more processors 1004 operate to provide one or more functions of a radio access node 1000 as described herein. In some embodiments, the function(s) are implemented in software that is stored, e.g., in the memory 1006 and executed by the one or more processors 1004.

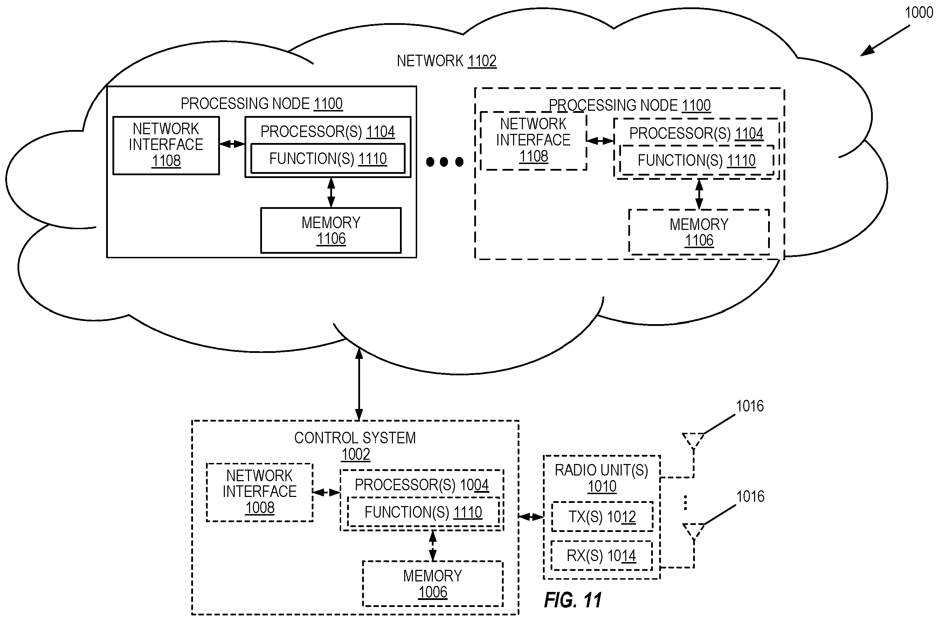

Figure 11 is a schematic block diagram that illustrates a virtualized embodiment of the radio access node 1000 according to some embodiments of the present disclosure. This discussion is equally applicable to other types of network nodes. Further, other types of network nodes may have similar virtualized architectures. Again, optional features are represented by dashed boxes.

As used herein, a "virtualized" radio access node is an implementation of the radio access node 1000 in which at least a portion of the functionality of the radio access node 1000 is implemented as a virtual component(s) (e.g., via a virtual machine(s) executing on a physical processing node(s) in a network(s)). As illustrated, in this example, the radio access node 1000 may include the control system 1002 and/or the one or more radio units 1010, as described above. The control system 1002 may be connected to the radio unit(s) 1010 via, for example, an optical cable or the like. The radio access node 1000 includes one or more processing nodes 1100 coupled to or included as part of a network(s) 1102. If present, the control system 1002 or the radio unit(s) are connected to the processing node(s) 1100 via the network 1102. Each processing node 1100 includes one or more processors 1104 (e.g., CPUs, ASICs, FPGAs, and/or the like), memory 1106, and a network interface 1108.

In this example, functions 1110 of the radio access node 1000 described herein are implemented at the one or more processing nodes 1100 or distributed across the one or more processing nodes 1100 and the control system 1002 and/or the radio unit(s) 1010 in any desired manner. In some particular embodiments, some or all of the functions 1110 of the radio access node 1000 described herein are implemented as virtual components executed by one or more virtual machines implemented in a virtual environment(s) hosted by the processing node(s) 1100. As will be appreciated by one of ordinary skill in the art, additional signaling or communication between the processing node(s) 1100 and the control system 1002 is used in order to carry out at least some of the desired functions 1110. Notably, in some embodiments, the control system 1002 may not be included, in which case the radio unit(s) 1010 communicate directly with the processing node(s) 1100 via an appropriate network interface(s).

In some embodiments, a computer program including instructions which, when executed by at least one processor, causes the at least one processor to carry out the functionality of radio access node 1000 or a node (e.g., a processing node 1100) implementing one or more of the functions 1110 of the radio access node 1000 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 12 is a schematic block diagram of the radio access node 1000 according to some other embodiments of the present disclosure. The radio access node 1000 includes one or more modules 1200, each of which is implemented in software. The module(s) 1200 provide the functionality of the radio access node 1000 described herein. This discussion is equally applicable to the processing node 1100 of Figure 11 where the modules 1200 may be implemented at one of the processing nodes 1100 or distributed across multiple processing nodes 1100 and/or distributed across the processing node(s) 1100 and the control system 1002.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according to one or more embodiments of the present disclosure.

The scope of protection of the invention is defined in the appended set of claims.

## Claims

1. A method performed by a base station (202, 1000) for improving Physical Downlink Shared Channel, PDSCH, throughput, the method comprising:
receiving (406) a Physical Uplink Control Channel, PUCCH, transmission from a wireless communication device (212) over a wireless channel from the wireless communication device (212) to the base station (202, 1000);
decoding (408) the received PUCCH transmission with a first value of a function of the PUCCH transmission corresponding to a codeword of a codebook, wherein the first value is the maximum value of the function, the function being configured to determine, for each codeword of the codebook, a scalar product of rate de-matched soft values of the PUCCH transmission and the respective codeword;
decoding (408) the received PUCCH transmission with a second value of the function of the PUCCH transmission corresponding to another codeword of the codebook, wherein the second value is the next highest value of the function after the first value, and wherein a first decoding metric is the first value of the function, and a second decoding metric is a difference between the first value of the function and the second value of the function;
determining (410) that the PUCCH transmission is discontinuous transmission, DTX, true in response to either the first decoding metric being below a first decoding metric threshold, or the second decoding metric being below a second decoding metric threshold;
determining (412) that the PUCCH transmission is DTX false in response to both the first decoding metric being equal to or above the first decoding metric threshold, and the second decoding metric being equal to or above the second decoding metric threshold; and
performing (414) a Hybrid Automatic Repeat Request, HARQ, process operation based on whether the PUCCH transmission is DTX true or DTX false.

2. The method of claim 1, wherein the first value of the function is a scalar product of rate de-matched soft values of the PUCCH transmission and the codeword.

3. The method of any of claims 1 to 2, wherein the second value of the function is a scalar product of rate de-matched soft values of the PUCCH transmission and the another codeword.

4. The method of claim 3, wherein the determining the first value of the function and the second value of the function comprises:
determining (408) the scalar products of rate de-matched soft values of the PUCCH transmission and each codeword in the codebook.

5. The method of any of claims 1 to 4, wherein the PUCCH transmission comprises HARQ bits associated with a PDSCH transmission.

6. The method of any of claims 1 to 5, wherein the first decoding metric threshold and the second decoding metric threshold are pre-simulated.

7. The method of any of claims 1 to 6, wherein the second decoding metric threshold is selected first such that a first signal to noise ratio, SNR, associated with a 1% acknowledgement miss rate is equal to or higher than a second SNR associated with a 0.1% false acknowledgment rate, then the first decoding metric threshold is selected or simulated such that false detection rate (DTX to Acknowledgement rate) is less than 1% in conjunction with the second metric threshold.

8. The method of any of claims 1 to 7, wherein the first decoding metric threshold is selected based on:
a speed of a User Equipment, UE;
whether frequency hopping is enabled; and
whether the PUCCH transmission is demodulated using Maximum Ratio Combining, MRC, or Interference Rejection Combining, IRC demodulation.

9. The method of any of claims 1 to 8, wherein performing the HARQ process operation further comprises:
in response to the PUCCH being DTX true, providing (416) to a base station scheduler a request to retransmit the PDSCH transmission;
in response to the received PUCCH being DTX false, performing (418, 424) HARQ detection on the PDSCH transmission.

10. The method of any of claims 1 to 8, wherein the PDSCH transmission from base station (202, 1000) comprises at least one of a HARQ Acknowledgement, ACK, or Negative ACK, NACK.

11. The method of claim 10, wherein performing the HARQ process operation further comprises:
performing (420) a PDSCH outer-loop adjustment based on the at least one of the HARQ ACK or NACK; and
performing (422) a Physical Downlink Control Channel, PDCCH, outer-loop adjustment based on at least one of the HARQ ACK, HARQ NACK, or whether DTX is true or false.

12. A base station (202, 1000) configured to improve Physical Downlink Shared Channel, PDSCH, throughput, base station (202, 1000) comprising a radio interface and processing circuitry configured to perform the method of any of claims 1 to 11.

13. A non-transitory computer-readable medium comprising instructions stored thereon, that when implemented by a processor perform operations for improving Physical Downlink Shared Channel, PDSCH, throughput, the operations comprising:
receiving (406) a Physical Uplink Control Channel, PUCCH, transmission from a wireless communication device (212) over a wireless channel from the wireless communication device (212) to a base station (202, 1000);
decoding (408) the received PUCCH transmission with a first value of a function of the PUCCH transmission corresponding to a codeword of a codebook, wherein the first value is the maximum value of the function, the function being configured to determine, for each codeword of the codebook, a scalar product of rate de-matched soft values of the PUCCH transmission and the respective codeword;
decoding (408) the received PUCCH transmission with a second value of the function of the PUCCH transmission corresponding to another codeword of the codebook, wherein the second value is the next highest value of the function after the first value, and wherein a first decoding metric is the first value of the function, and a second decoding metric is a difference between the first value of the function and the second value of the function;
determining (410) that the PUCCH transmission is discontinuous transmission, DTX, true in response to either the first decoding metric being below a first decoding metric threshold, or the second decoding metric being below a second decoding metric threshold;
determining (412) that the PUCCH transmission is DTX false in response to both the first decoding metric being equal to or above the first decoding metric threshold, and the second decoding metric being equal to or above the second decoding metric threshold; and
performing (414) a Hybrid Automatic Repeat Request, HARQ, process operation based on whether the PUCCH transmission is DTX true or DTX false.

## Patentansprüche

1. Ein durch eine Basisstation (202, 1000) durchgeführtes Verfahren zum Verbessern des Durchsatzes eines gemeinsam genutzten physikalischen Downlink-Kanals, PDSCH, wobei das Verfahren Folgendes beinhaltet:
Empfangen (406) einer Übertragung eines physikalischen Uplink-Steuerkanals, PUCCH, von einer drahtlosen Kommunikationsvorrichtung (212) über einen drahtlosen Kanal von der drahtlosen Kommunikationsvorrichtung (212) an die Basisstation (202, 1000);
Decodieren (408) der empfangenen PUCCH-Übertragung mit einem ersten Wert einer Funktion der PUCCH-Übertragung, der einem Codewort eines Codebuchs entspricht,
wobei der erste Wert der Maximalwert der Funktion ist, wobei die Funktion konfiguriert ist, um für jedes Codewort des Codebuchs ein Skalarprodukt von Softwerten der PUCCH-Übertragung nach aufgehobener Ratenanpassung und des jeweiligen Codeworts zu bestimmen;
Decodieren (408) der empfangenen PUCCH-Übertragung mit einem zweiten Wert der Funktion der PUCCH-Übertragung, der einem anderen Codewort des Codebuchs entspricht, wobei der zweite Wert der nächsthöchste Wert der Funktion nach dem ersten Wert ist und wobei eine erste Decodierungsmetrik der erste Wert der Funktion ist und eine zweite Decodierungsmetrik eine Differenz zwischen dem ersten Wert der Funktion und dem zweiten Wert der Funktion ist;
Bestimmen (410), dass für die PUCCH-Übertragung diskontinuierliche Übertragung, DTX, zutrifft, als Reaktion darauf, dass entweder die erste Decodierungsmetrik unter einem ersten Decodierungsmetrikschwellenwert liegt oder die zweite Decodierungsmetrik unter einem zweiten Decodierungsmetrikschwellenwert liegt;
Bestimmen (412), dass für die PUCCH-Übertragung DTX nicht zutrifft, als Reaktion darauf, dass sowohl die erste Decodierungsmetrik gleich dem ersten Decodierungsmetrikschwellenwert ist oder darüber liegt als auch die zweite Decodierungsmetrik gleich dem zweiten Decodierungsmetrikschwellenwert ist oder darüber liegt; und
Durchführen (414) einer Prozessoperation einer hybriden automatischen Wiederholungsanforderung, HARQ, auf der Basis davon, ob für die PUCCH-Übertragung DTX zutrifft oder DTX nicht zutrifft.

2. Verfahren gemäß Anspruch 1, wobei der erste Wert der Funktion ein Skalarprodukt von Softwerten der PUCCH-Übertragung nach aufgehobener Ratenanpassung und des Codeworts ist.

3. Verfahren gemäß einem der Ansprüche 1 bis 2, wobei der zweite Wert der Funktion ein Skalarprodukt von Softwerten der PUCCH-Übertragung nach aufgehobener Ratenanpassung und des anderen Codeworts ist.

4. Verfahren gemäß Anspruch 3, wobei das Bestimmen des ersten Werts der Funktion und des zweiten Werts der Funktion Folgendes beinhaltet:
Bestimmen (408) der Skalarprodukte von Softwerten der PUCCH-Übertragung nach aufgehobener Ratenanpassung und jedes Codeworts in dem Codebuch.

5. Verfahren gemäß einem der Ansprüche 1 bis 4, wobei die PUCCH-Übertragung HARQ-Bits beinhaltet, die mit einer PDSCH-Übertragung assoziiert sind.

6. Verfahren gemäß einem der Ansprüche 1 bis 5, wobei der erste Decodierungsmetrikschwellenwert und der zweite Decodierungsmetrikschwellenwert vorsimuliert sind.

7. Verfahren gemäß einem der Ansprüche 1 bis 6, wobei zuerst der zweite Decodierungsmetrikschwellenwert so ausgewählt wird, dass ein erstes Signal-RauschVerhältnis, SNR, das mit einer 1-%-Bestätigungsfehlrate assoziiert ist, gleich einem zweiten SNR oder höher als dieses ist, das mit einer 0,1-%-Falschbestätigungsrate assoziiert ist, dann der erste Decodierungsmetrikschwellenwert so ausgewählt oder simuliert wird, dass die Falscherkennungsrate (DTX-zu-Bestätigungsrate) in Verbindung mit dem zweiten Metrikschwellenwert weniger als 1 % beträgt.

8. Verfahren gemäß einem der Ansprüche 1 bis 7, wobei der erste Decodierungsmetrikschwellenwert auf der Basis von Folgendem ausgewählt wird:
einer Geschwindigkeit eines Benutzergeräts, UE;
ob Frequenzsprung aktiviert ist; und
ob die PUCCH-Übertragung unter Verwendung von Maximum-Ratio-Combining-Demodulation, MRC-Demodulation, oder Interference-Rejection-Combining-Demodulation, IRC-Demodulation, demoduliert wird.

9. Verfahren gemäß einem der Ansprüche 1 bis 8, wobei das Durchführen der HARQ-Prozessoperation ferner Folgendes beinhaltet:
als Reaktion darauf, dass für den PUCCH DTX zutrifft, Bereitstellen (416) einer Anforderung zum erneuten Übertragen der PDSCH-Übertragung für einen Basisstationsscheduler;
als Reaktion darauf, dass für den empfangenen PUCCH DTX nicht zutrifft, Durchführen (418, 424) von HARQ-Detektion an der PDSCH-Übertragung.

10. Verfahren gemäß einem der Ansprüche 1 bis 8, wobei die PDSCH-Übertragung von der Basisstation (202, 1000) mindestens eines von einer HARQ-Bestätigung, ACK, oder einer negativen ACK, NACK, beinhaltet.

11. Verfahren gemäß Anspruch 10, wobei das Durchführen der HARQ-Prozessoperation ferner Folgendes beinhaltet:
Durchführen (420) einer PDSCH-Außenschleifenjustierung auf der Basis der mindestens einen von der HARQ-ACK oder NACK; und
Durchführen (422) einer Außenschleifenjustierung eines physikalischen Downlink-Steuerkanals, PDCCH, auf der Basis von mindestens einem von der HARQ-ACK, der HARQ-NACK oder ob DTX zutrifft oder nicht zutrifft.

12. Eine Basisstation (202, 1000), die konfiguriert ist, um den Durchsatz eines gemeinsam genutzten physikalischen Downlink-Kanals, PDSCH, zu verbessern, wobei die Basisstation (202, 1000) eine Funkschnittstelle und eine Verarbeitungsschaltung, die konfiguriert ist, um das Verfahren gemäß einem der Ansprüche 1 bis 11 durchzuführen, beinhaltet.

13. Ein nichttransitorisches computerlesbares Medium, das darauf gespeicherte Anweisungen beinhaltet, die, wenn sie von einem Prozessor implementiert werden, Operationen zum Verbessern des Durchsatzes eines gemeinsam genutzten physikalischen Downlink-Kanals, PDSCH, durchführen, wobei die Operationen Folgendes beinhalten:
Empfangen (406) einer Übertragung eines physikalischen Uplink-Steuerkanals, PUCCH, von einer drahtlosen Kommunikationsvorrichtung (212) über einen drahtlosen Kanal von der drahtlosen Kommunikationsvorrichtung (212) an eine Basisstation (202, 1000);
Decodieren (408) der empfangenen PUCCH-Übertragung mit einem ersten Wert einer Funktion der PUCCH-Übertragung, der einem Codewort eines Codebuchs entspricht,
wobei der erste Wert der Maximalwert der Funktion ist, wobei die Funktion konfiguriert ist, um für jedes Codewort des Codebuchs ein Skalarprodukt von Softwerten der PUCCH-Übertragung nach aufgehobener Ratenanpassung und des jeweiligen Codeworts zu bestimmen;
Decodieren (408) der empfangenen PUCCH-Übertragung mit einem zweiten Wert der Funktion der PUCCH-Übertragung, der einem anderen Codewort des Codebuchs entspricht, wobei der zweite Wert der nächsthöchste Wert der Funktion nach dem ersten Wert ist und wobei eine erste Decodierungsmetrik der erste Wert der Funktion ist und eine zweite Decodierungsmetrik eine Differenz zwischen dem ersten Wert der Funktion und dem zweiten Wert der Funktion ist;
Bestimmen (410), dass für die PUCCH-Übertragung diskontinuierliche Übertragung, DTX, zutrifft, als Reaktion darauf, dass entweder die erste Decodierungsmetrik unter einem ersten Decodierungsmetrikschwellenwert liegt oder die zweite Decodierungsmetrik unter einem zweiten Decodierungsmetrikschwellenwert liegt;
Bestimmen (412), dass für die PUCCH-Übertragung DTX nicht zutrifft, als Reaktion darauf, dass sowohl die erste Decodierungsmetrik gleich dem ersten Decodierungsmetrikschwellenwert ist oder darüber liegt als auch die zweite Decodierungsmetrik gleich dem zweiten Decodierungsmetrikschwellenwert ist oder darüber liegt; und
Durchführen (414) einer Prozessoperation einer hybriden automatischen Wiederholungsanforderung, HARQ, auf der Basis davon, ob für die PUCCH-Übertragung DTX zutrifft oder DTX nicht zutrifft.

## Revendications

1. Un procédé réalisé par une station de base (202, 1000) pour améliorer le débit de canal physique partagé de liaison descendante, PDSCH, le procédé comprenant :
la réception (406) d9une transmission de canal physique de commande de liaison montante, PUCCH, en provenance d9un dispositif de communication sans fil (212) sur un canal sans fil du dispositif de communication sans fil (212) à la station de base (202, 1000) ;
le décodage (408) de la transmission PUCCH reçue avec une première valeur d9une fonction de la transmission PUCCH correspondant à un mot de code d9un livre de codes, dans lequel la première valeur est la valeur maximale de la fonction, la fonction étant configurée pour déterminer, pour chaque mot de code du livre de codes, un produit scalaire de valeurs souples de taux désappariés de la transmission PUCCH et du mot de code respectif ;
le décodage (408) de la transmission PUCCH reçue avec une deuxième valeur de la fonction de la transmission PUCCH correspondant à un autre mot de code du livre de codes, la deuxième valeur étant la valeur la plus élevée suivante de la fonction après la première valeur, et dans lequel une première métrique de décodage est la première valeur de la fonction, et une deuxième métrique de décodage est une différence entre la première valeur de la fonction et la deuxième valeur de la fonction ;
la détermination (410) que la transmission PUCCH est une transmission discontinue, DTX, vraie en réponse soit au fait que la première métrique de décodage est inférieure à un premier seuil de métrique de décodage, soit au fait que la deuxième métrique de décodage est inférieure à un deuxième seuil de métrique de décodage ;
la détermination (412) que la transmission PUCCH est une DTX fausse en réponse à la fois au fait que la première métrique de décodage est égale ou supérieure au premier seuil de métrique de décodage, et au fait que la deuxième métrique de décodage est égale ou supérieure au deuxième seuil de métrique de décodage ; et
la réalisation (414) d9une opération de processus de demande de répétition automatique hybride, HARQ, selon que la transmission PUCCH est une DTX vraie ou une DTX fausse.

2. Le procédé de la revendication 1, dans lequel la première valeur de la fonction est un produit scalaire de valeurs souples de taux désappariés de la transmission PUCCH et du mot de code.

3. Le procédé de n9importe lesquelles des revendications 1 à 2, dans lequel la deuxième valeur de la fonction est un produit scalaire de valeurs souples de taux désappariés de la transmission PUCCH et de l9autre mot de code.

4. Le procédé de la revendication 3, dans lequel la détermination de la première valeur de la fonction et de la deuxième valeur de la fonction comprend :
la détermination (408) des produits scalaires de valeurs souples de taux désappariés de la transmission PUCCH et de chaque mot de code dans le livre de codes.

5. Le procédé de n9importe lesquelles des revendications 1 à 4, dans lequel la transmission PUCCH comprend des bits HARQ associés à une transmission PDSCH.

6. Le procédé de n9importe lesquelles des revendications 1 à 5, dans lequel le premier seuil de métrique de décodage et le deuxième seuil de métrique de décodage sont pré-simulés.

7. Le procédé de n9importe lesquelles des revendications 1 à 6, dans lequel le deuxième seuil de métrique de décodage est sélectionné en premier de telle sorte qu9un premier rapport signal sur bruit, SNR, associé à un taux d9échec d9accusé de réception à 1 % est égal ou plus élevé qu9un deuxième SNR associé à un taux d9accusé de réception faux à 0,1 %, puis le premier seuil de métrique de décodage est sélectionné ou simulé de telle sorte qu9un taux de détection fausse (taux DTX sur accusé de réception) est de moins de 1 % conjointement avec le deuxième seuil de métrique.

8. Le procédé de n9importe lesquelles des revendications 1 à 7, dans lequel le premier seuil de métrique de décodage est sélectionné sur la base :
d9une vitesse d9un équipement utilisateur, UE ;
de si un saut de fréquence est activé ; et
de si la transmission PUCCH est démodulée en utilisant une combinaison de rapports maximaux, MRC, ou une démodulation de combinaison de rejet d9interférence, IRC.

9. Le procédé de n9importe lesquelles des revendications 1 à 8, dans lequel la réalisation de l9opération de processus HARQ comprend en outre :
en réponse au fait que le PUCCH est une DTX vraie, la fourniture (416) à un planificateur de station de base d9une demande de retransmission de la transmission PDSCH ;
en réponse au fait que le PUCCH reçu est une DTX fausse, la réalisation (418, 424) d9une détection HARQ sur la transmission PDSCH.

10. Le procédé de n9importe lesquelles des revendications 1 à 8, dans lequel la transmission PDSCH provenant de la station de base (202, 1000) comprend au moins un élément parmi un accusé de réception, ACK, ou un ACK négatif, NACK HARQ.

11. Le procédé de la revendication 10, dans lequel la réalisation de l9opération de processus HARQ comprend en outre :
la réalisation (420) d9un réglage de boucle extérieure PDSCH sur la base de l9au moins un élément parmi l9ACK ou le NACK HARQ ; et
la réalisation (422) d9un réglage de boucle extérieure de canal physique de commande de liaison descendante, PDCCH, sur la base d9au moins un élément parmi l9ACK HARQ, le NACK HARQ, ou si la DTX est vraie ou fausse.

12. Une station de base (202, 1000) configurée pour améliorer le débit de canal physique partagé de liaison descendante, PDSCH, la station de base (202, 1000) comprenant une interface radio et une circuiterie de traitement configurée pour réaliser le procédé de n9importe lesquelles des revendications 1 à 11.

13. Un support non transitoire lisible par ordinateur sur lequel sont stockées des instructions qui, lorsqu9elles sont mises en Suvre par un processeur, réalisent des opérations pour améliorer le débit de canal physique partagé de liaison descendante, PDSCH, les opérations comprenant :
la réception (406) d9une transmission de canal physique de commande de liaison montante, PUCCH, en provenance d9un dispositif de communication sans fil (212) sur un canal sans fil du dispositif de communication sans fil (212) à une station de base (202, 1000) ;
le décodage (408) de la transmission PUCCH reçue avec une première valeur d9une fonction de la transmission PUCCH correspondant à un mot de code d9un livre de codes, dans lequel la première valeur est la valeur maximale de la fonction, la fonction étant configurée pour déterminer, pour chaque mot de code du livre de codes, un produit scalaire de valeurs souples de taux désappariés de la transmission PUCCH et du mot de code respectif ;
le décodage (408) de la transmission PUCCH reçue avec une deuxième valeur de la fonction de la transmission PUCCH correspondant à un autre mot de code du livre de codes, la deuxième valeur étant la valeur la plus élevée suivante de la fonction après la première valeur, et dans lequel une première métrique de décodage est la première valeur de la fonction, et une deuxième métrique de décodage est une différence entre la première valeur de la fonction et la deuxième valeur de la fonction ;
la détermination (410) que la transmission PUCCH est une transmission discontinue, DTX, vraie en réponse soit au fait que la première métrique de décodage est inférieure à un premier seuil de métrique de décodage, soit au fait que la deuxième métrique de décodage est inférieure à un deuxième seuil de métrique de décodage ;
la détermination (412) que la transmission PUCCH est une DTX fausse en réponse à la fois au fait que la première métrique de décodage est égale ou supérieure au premier seuil de métrique de décodage, et au fait que la deuxième métrique de décodage est égale ou supérieure au deuxième seuil de métrique de décodage ; et
la réalisation (414) d9une opération de processus de demande de répétition automatique hybride, HARQ, selon que la transmission PUCCH est une DTX vraie ou une DTX fausse.
